# EUROPEAN PATENT APPLICATION

(11) **EP 4 506 682 A1**
(43) Date of publication of application: **12.02.2025**
(21) Application number: 23831129.4
(22) Date of filing: 15.06.2023
(51) Int. Cl.: G01N 21/88, B25J 9/22, G05B 19/42

(54) **ROBOT TEACHING DEVICE, VISUAL INSPECTION SYSTEM, AND ROBOT TEACHING METHOD**

(30) Priority: 29.06.2022 JP 2022105109
(71) Applicant: KAWASAKI JUKOGYO KABUSHIKI KAISHA, Kobe-shi, Hyogo 650-8670 (JP)
(72) Inventor: YAMASUMI Satoru, Kobe-shi, Hyogo 650-8670 (JP); OHNISHI Masafumi, Kobe-shi, Hyogo 650-8670 (JP); HANAWA Yuuki, Kobe-shi, Hyogo 650-8670 (JP); KAWA Tomoaki, Kobe-shi, Hyogo 650-8670 (JP); AOYAMA Takeshi, Kobe-shi, Hyogo 650-8670 (JP)
(74) Representative: Müller-Boré & Partner Patentanwälte PartG mbB
(86) International application number: PCT/JP2023/022257
(87) International publication number: WO 2024/004681

(57) **Abstract**

A robot teaching device (1) is a robot teaching device for a visual inspection system (100) including an imager (2) to image a workpiece (W), an illuminator (3) to emit illumination light to the workpiece, and a robot (4) to move the imager and the illuminator to inspect an appearance of the workpiece, and includes a display (11) and a processing unit (13) to acquire a state of reflection of the illumination light on the workpiece by simulation and display an image relating to an acquired state of reflection of the illumination light on the display, when the robot is taught on the display to operate.

## Description

### Technical Field

The present disclosure relates to a robot teaching device, a visual inspection system, and a robot teaching method.

### Background Art

Conventionally, a teaching device is known. Such a teaching device is disclosed in Japanese Patent No. 4266946, for example.

Japanese Patent No. 4266946 discloses an offline teaching device for a vision sensor. This offline teaching device includes a storage that stores the shapes and dimensions of a workpiece, a robot that performs an operation on the workpiece, and a vision sensor that measures the workpiece, and a display that displays images of the workpiece, the robot, and the vision sensor based on the data stored in the storage. This offline teaching device can arrange the workpiece, the robot, and the vision sensor on the display and teach and adjust the vision sensor offline. Specifically, this offline teaching device arranges a camera on the display, images a measurement portion of the workpiece with the arranged camera, and generates a camera image of the imaged measurement portion.

### Prior Art

### Patent Document

Patent Document 1: Japanese Patent No. 4266946

### Summary of the Invention

### Problems to be Solved by the Invention

However, the technology of the offline teaching device described in Japanese Patent No. 4266946 is a technology for teaching the vision sensor offline, and thus in a visual inspection system in which a robot moves an imager or a workpiece to inspect the appearance of the workpiece, it is difficult to apply this technology to applications in which the robot is taught offline to operate. In such a visual inspection system, when the robot is taught offline to operate, it is not possible to accurately determine which portion of the workpiece is being inspected based on the image captured by the imager, and thus an omission of inspection of the appearance of the workpiece may disadvantageously occur. Thus, it is difficult to teach a robot to operate in a manner that eliminates or minimizes omissions of inspection the appearance of the workpiece.

The present disclosure is intended to solve the above problems. The present disclosure aims to provide a robot teaching device, a visual inspection system, and a robot teaching method each capable of easily teaching a robot to operate in a manner that eliminates or minimizes omissions of inspection the appearance of a workpiece.

### Means for Solving the Problems

A robot teaching device according to a first aspect of the present disclosure is a robot teaching device for a visual inspection system including an imager to image a workpiece, an illuminator to emit illumination light to the workpiece, and a robot to move the imager and the illuminator, or the workpiece to inspect an appearance of the workpiece, and includes a display, and a processing unit to acquire a state of reflection of the illumination light on the workpiece by simulation and display an image relating to an acquired state of reflection of the illumination light on the display, when the robot is taught on the display to operate.

As described above, the robot teaching device according to the first aspect of the present disclosure includes the processing unit to acquire the image relating to the state of reflection of the illumination light on the workpiece by the simulation and display the acquired state of reflection of the illumination light on the display, when the robot is taught on the display to operate. When the appearance of the workpiece is inspected, the entire range of the image captured by the imager does not contribute to the inspection of the appearance of the workpiece, but only a high-brightness portion of the image captured by the imager, which has a large reflection amount of illumination light and high brightness, contributes to the inspection of the appearance of the workpiece. Therefore, it is possible to know with high accuracy which portion of the workpiece is being inspected by identifying the high-brightness portion, and thus it is possible to teach the robot to operate in a manner that eliminates or minimizes omissions of inspection the appearance of the workpiece. Therefore, as described above, by displaying the image relating to the state of reflection of the illumination light on the display, it is possible to easily identify the high-brightness portion that actually contributes to the inspection of the appearance of the workpiece based on the image relating to the state of reflection of the illumination light displayed on the display, and thus it is possible to easily teach the robot to operate in a manner that eliminates or minimizes omissions of inspection the appearance of the workpiece.

A visual inspection system according to a second aspect of the present disclosure includes an imager to image a workpiece, an illuminator to emit illumination light to the workpiece, a robot to move the imager and the illuminator, or the workpiece to inspect an appearance of the workpiece, and a robot teaching device. The robot teaching device includes a display, and a processing unit to acquire a state of reflection of the illumination light on the workpiece by simulation and display an image relating to an acquired state of reflection of the illumination light on the display, when the robot is taught on the display to operate.

As described above, the visual inspection system according to the second aspect of the present disclosure includes the processing unit to acquire the state of reflection of the illumination light on the workpiece by the simulation and display the image relating to the acquired state of reflection of the illumination light on the display, when the robot is taught on the display to operate. Thus, it is possible to easily identify a high-brightness portion that actually contributes to the inspection of the appearance of the workpiece based on the image relating to the state of reflection of the illumination light displayed on the display, and thus it is possible to provide the visual inspection system capable of easily teaching the robot to operate in a manner that eliminates or minimizes omissions of inspection the appearance of the workpiece.

A robot teaching method according to a third aspect of the present disclosure is a robot teaching method for a visual inspection system including an imager to image a workpiece, an illuminator to emit illumination light to the workpiece, and a robot to move the imager and the illuminator, or the workpiece to inspect an appearance of the workpiece, and includes, when the robot is taught on the display to operate, acquiring a state of reflection of the illumination light on the workpiece by simulation, and displaying an image relating to an acquired state of reflection of the illumination light on the display.

As described above, the robot teaching method according to the third aspect of the present disclosure includes when the robot is taught on the display to operate, acquiring the state of reflection of the illumination light on the workpiece by the simulation, and displaying the image relating to the acquired state of reflection of the illumination light on the display. Thus, it is possible to easily identify a high-brightness portion that actually contributes to the inspection of the appearance of the workpiece based on the image relating to the state of reflection of the illumination light displayed on the display, and thus it is possible to provide the robot teaching method capable of easily teaching the robot to operate in a manner that eliminates or minimizes omissions of inspection the appearance of the workpiece.

### Advantageous Effect of the Invention

According to the present disclosure, as described above, it is possible to easily teach the robot to operate in a manner that eliminates or minimizes omissions of inspection the appearance of the workpiece.

### Brief Description of the Drawings

FIG. 1 is a diagram showing a visual inspection system according to an embodiment.
FIG. 2 is a diagram for illustrating setting of teaching points and a movement path in a robot teaching device according to the embodiment.
FIG. 3 is a diagram for illustrating a state of reflection of illumination light in the robot teaching device according to the embodiment.
FIG. 4 is a diagram for illustrating a state of reflection of an illuminator in a captured image when a robot is in a predetermined posture according to the embodiment.
FIG. 5 is a diagram for illustrating a state of reflection of the illuminator in a captured image when an imager and the illuminator are moved by the robot according to the embodiment.
FIG. 6 is a diagram for illustrating superimposed display of an inspection region according to the embodiment.
FIG. 7 is a diagram for illustrating superimposed display of all inspection regions according to the embodiment.
FIG. 8 is a diagram for illustrating superimposed display of any plurality of inspection regions according to the embodiment.
FIG. 9 is a flowchart for illustrating a flow of offline teaching using the robot teaching device according to the embodiment.

### Modes for Carrying Out the Invention

An embodiment embodying the present disclosure is hereinafter described on the basis of the drawings.

### Configuration of Visual Inspection System

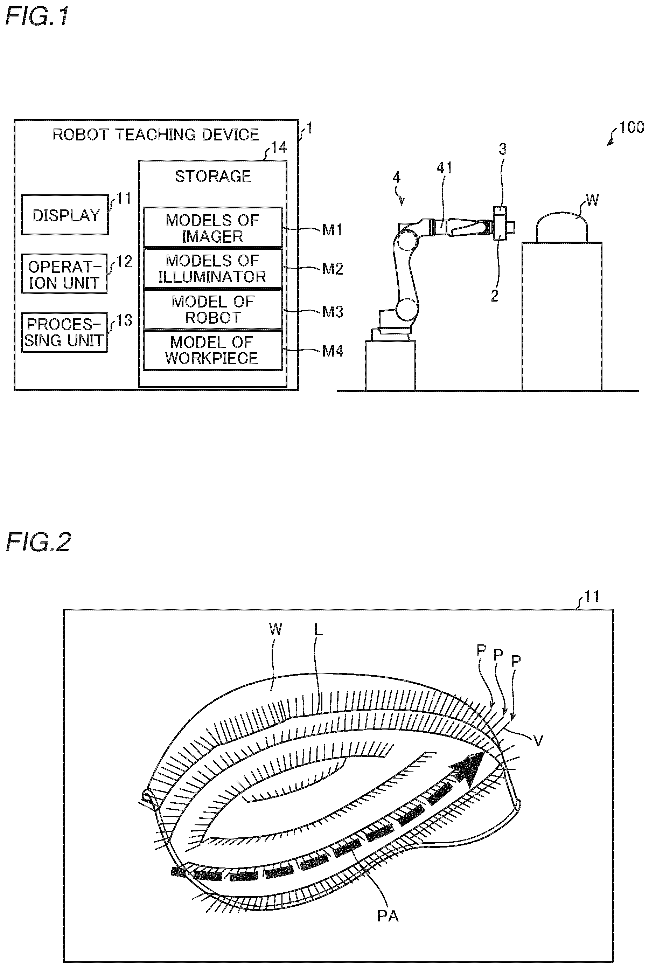

The configuration of a visual inspection system 100 according to the embodiment is now described with reference to FIGS. 1 to 8. As shown in FIG. 1, the visual inspection system 100 is a system for inspecting the appearance of a workpiece W to be inspected. In this embodiment, the workpiece W includes a curved surface. The visual inspection system 100 includes a robot teaching device 1, an imager 2, an illuminator 3, and a robot 4.

The robot teaching device 1 is a device for teaching the robot 4 to operate offline in order to inspect the appearance of the workpiece W. The robot teaching device 1 performs offline teaching to teach the robot 4 to operate on a display screen by simulation without using an actual machine. The robot teaching device 1 is a personal computer, for example. The robot teaching device 1 includes a display 11, an operation unit 12, a processing unit 13, and a storage 14. The display 11 includes a monitor such as a liquid crystal monitor and displays a screen. The operation unit 12 includes inputs such as a mouse and a keyboard and receives input operations from a user. The processing unit 13 includes a processor and performs various processes in the robot teaching device 1. The storage 14 includes a non-volatile memory and stores models M1 of the imager 2, models M2 of the illuminator 3, a model M3 of the robot 4, and a model M4 of the workpiece W, which are used in the simulation. The configuration of the offline teaching by the robot teaching device 1 is described below in detail.

The imager 2, the illuminator 3, and the robot 4 are devices that actually inspect the appearance of the workpiece W based on the results of teaching of the operation of the robot 4 by the robot teaching device 1. The imager 2 is a camera that images the workpiece W. The illuminator 3 emits illumination light to the workpiece W. The robot 4 moves the imager 2 and the illuminator 3 to inspect the appearance of the workpiece W. The robot 4 is a vertical articulated robot and includes an arm 41. The arm 41 includes a plurality of joints. The arm 41 holds the imager 2 and the illuminator 3 integrally at a distal end thereof. The robot 4 moves the imager 2 and the illuminator 3 with respect to the workpiece W by driving the plurality of joints of the arm 41.

In the inspection of the appearance of the workpiece W, a surface of the workpiece W is imaged by the imager 2 while the illuminator 3 emits illumination light to the workpiece W. Moreover, the imager 2 images the surface of the workpiece W while the robot 4 moves the imager 2 and the illuminator 3 with respect to the workpiece W. It is not known where on the surface of the workpiece W abnormalities such as foreign matter, scratches, and dents exist, and thus the workpiece W is basically imaged a plurality of times such that the entire surface of the workpiece W is covered. Then, based on the result of imaging of the workpiece W by the imager 2, it is inspected whether or not there are abnormalities such as foreign matter, scratches, and dents on the surface of the workpiece W.

### Offline Teaching

The processing unit 13 performs the offline teaching by simulation based on the models M1 of the imager 2, the models M2 of the illuminator 3, the model M3 of the robot 4, and the model M4 of the workpiece W stored in the storage 14. The processing unit 13 performs the offline teaching by simulation by displaying at least one of the imager 2, the illuminator 3, the robot 4, and the workpiece W on the display 11. In the offline teaching, the processing unit 13 displays teaching points P of the operation of the robot 4 and a movement path PA defined by the teaching points P on the display 11 based on the input operation of the user using the operation unit 12, as shown in FIG. 2.

In this embodiment, the processing unit 13 acquires the movement path PA for the robot 4 substantially perpendicular to the curved surface of the workpiece W and along the curved surface of the workpiece W, and displays the acquired movement path PA on the display 11. Specifically, when a line L is input by the user to the surface of the workpiece W displayed on the display 11, the processing unit 13 creates normal vectors V that are substantially perpendicular to the surface of the workpiece W at a location at which the line L passes. Distal ends of the normal vectors V are the teaching points P. Thus, the processing unit 13 acquires a plurality of teaching points P that are substantially perpendicular to the curved surface of the workpiece W and along the curved surface of the workpiece W. Furthermore, the processing unit 13 acquires the movement path PA that is substantially perpendicular to the curved surface of the workpiece W and along the curved surface of the workpiece W, based on the acquired plurality of teaching points P. Only one movement path PA is illustrated in FIG. 2.

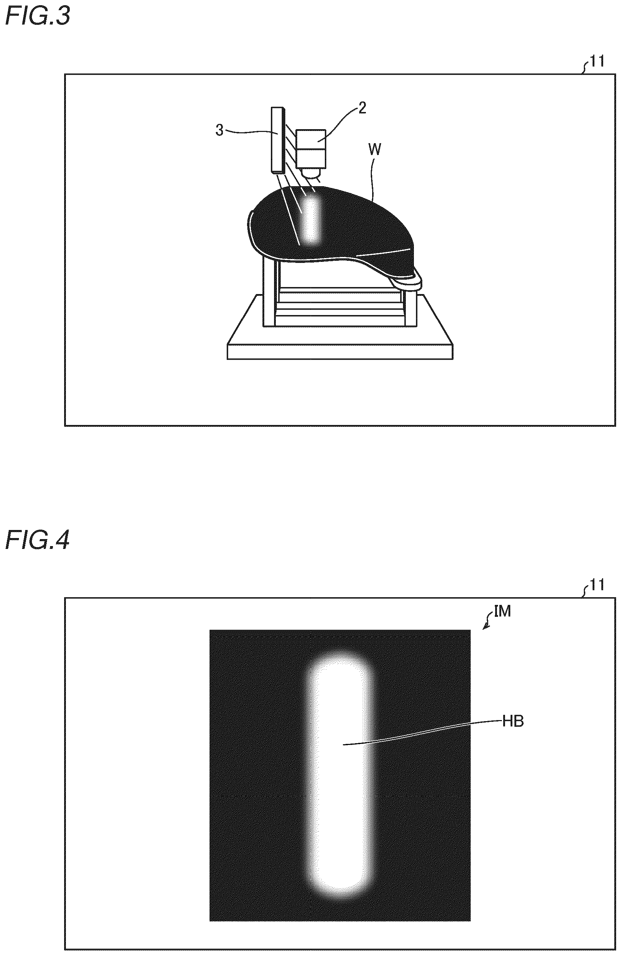

In this embodiment, as shown in FIGS. 3 to 7, when the robot 4 is taught on the display 11 to operate, the processing unit 13 acquires a state of reflection of illumination light on the workpiece W by simulation, and displays an image relating to the acquired state of reflection of the illumination light on the display 11. As shown in FIG. 3, for example, the processing unit 13 displays an image representing the state of reflection of the illumination light on the workpiece W displayed on the display 11. Furthermore, for example, the processing unit 13 changes the image representing the state of reflection of the illumination light on the workpiece W displayed on the display 11 in response to movement of the imager 2 and the illuminator 3 by the robot 4.

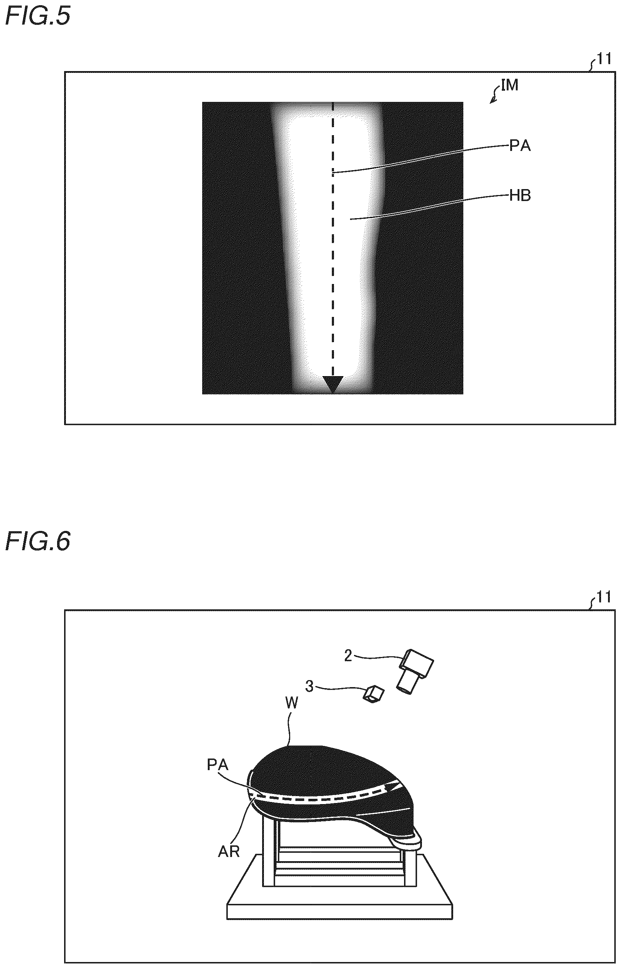

In this embodiment, as shown in FIGS. 4 and 5, the processing unit 13 acquires a state of reflection of the illuminator 3 in a captured image IM of the workpiece W captured by the imager 2 as the state of reflection of the illumination light, and displays the captured image IM of the workpiece W including the acquired state of reflection of the illuminator 3 on the display 11. The captured image IM is an example of an image relating to the state of reflection of the illumination light.

Specifically, as shown in FIG. 4, the processing unit 13 displays, on the display 11, the captured image IM of the workpiece W including the state of reflection of the illuminator 3 when the robot 4 is in a predetermined posture. That is, the processing unit 13 displays, the display 11, the captured image IM of the workpiece W including the state of reflection of the illuminator 3 at a predetermined teaching point P. The processing unit 13 can display, on the display 11, the captured image IM of the workpiece W including the state of reflection of the illuminator 3 at any teaching point P. The processing unit 13 displays the captured image IM based on the input operation of the user using the operation unit 12. The captured image IM includes a high-brightness portion HB having a large reflection amount of illumination light and high brightness. The high-brightness portion HB can also be said to be a portion of the captured image IM in which the illuminator 3 is reflected.

When there is an abnormality such as foreign matter, a scratch, or a dent on the surface of the workpiece W, a change such as distortion occurs in the high-brightness portion HB. Therefore, in the visual inspection system 100, the appearance of the workpiece W is inspected based on a change in the high-brightness portion HB having a large reflection amount of illumination light and high brightness in the image captured by the imager 2. In other words, when the appearance of the workpiece W is inspected, the entire range of the image captured by the imager 2 does not contribute to inspection of the appearance of the workpiece W, but the range of the high-brightness portion HB having a large reflection amount of illumination light and high brightness in the image captured by the imager 2 contributes to inspection of the appearance of the workpiece W.

In this embodiment, as shown in FIG. 5, the processing unit 13 displays, on the display 11, the captured image IM of the workpiece W including the state of reflection of the illuminator 3 when the imager 2 and the illuminator 3 are moved by the robot 4 along the movement path PA. Specifically, the processing unit 13 displays, on the display 11, the captured image IM of the workpiece W including the state of reflection of the illuminator 3 when the imager 2 scans and images the workpiece W while the imager 2 and the illuminator 3 are moved by the robot 4 along the movement path PA. The processing unit 13 can display, on the display 11, the captured image IM of the workpiece W including the state of reflection of the illuminator 3 for any movement path PA. The processing unit 13 displays this captured image IM based on the input operation of the user using the operation unit 12. This captured image IM includes the band-shaped high-brightness portion HB corresponding to the movement path PA. The width of the high-brightness portion HB changes in response to a change in the curved surface of the workpiece W. Specifically, the width of the high-brightness portion HB is smaller in a portion in which the curvature of the curved surface of the workpiece W is larger, and the width of the high-brightness portion HB is larger in a portion in which the curvature of the curved surface of the workpiece W is smaller. This captured image IM corresponds to an image captured when an inspection operation is actually performed by the robot 4. That is, when the appearance of the workpiece W is actually inspected, the appearance of the workpiece W is inspected based on the band-shaped high-brightness portion HB.

In this embodiment, as shown in FIGS. 6 to 8, the processing unit 13 acquires the state of reflection of the illuminator 3 in the captured image IM of the workpiece W captured by the imager 2 as the state of reflection of the illumination light, acquires an inspection region AR in which the workpiece W can be inspected based on the acquired state of reflection of the illuminator 3, and displays the acquired inspection region AR superimposed on the workpiece W displayed on the display 11. At this time, the processing unit 13 acquires a region within the field of view of the imager 2 in which the state of reflection of the illuminator 3 as viewed from the imager 2 is appropriate, i.e., a region corresponding to the high-brightness portion HB, as the inspection region AR. In addition, the processing unit 13 displays the acquired inspection region AR superimposed on the workpiece W displayed on the display 11 in a color different from that of the workpiece W. That is, the processing unit 13 color-maps the acquired inspection region AR on the workpiece W displayed on the display 11. Thus, it is possible to easily visually recognize the inspection region AR. The inspection region AR is an example of an image relating to the state of reflection of the illumination light.

In this embodiment, as shown in FIG. 6, the processing unit 13 acquires the band-shaped inspection region AR when the imager 2 and the illuminator 3 are moved by the robot 4 along the movement path PA, and displays the acquired band-shaped inspection region AR superimposed on the workpiece W displayed on the display 11. Specifically, the processing unit 13 acquires the band-shaped inspection region AR when the imager 2 scans and images the workpiece W while the imager 2 and the illuminator 3 are moved by the robot 4 along the movement path PA, and displays the acquired band-shaped inspection region AR superimposed on the workpiece W displayed on the display 11.

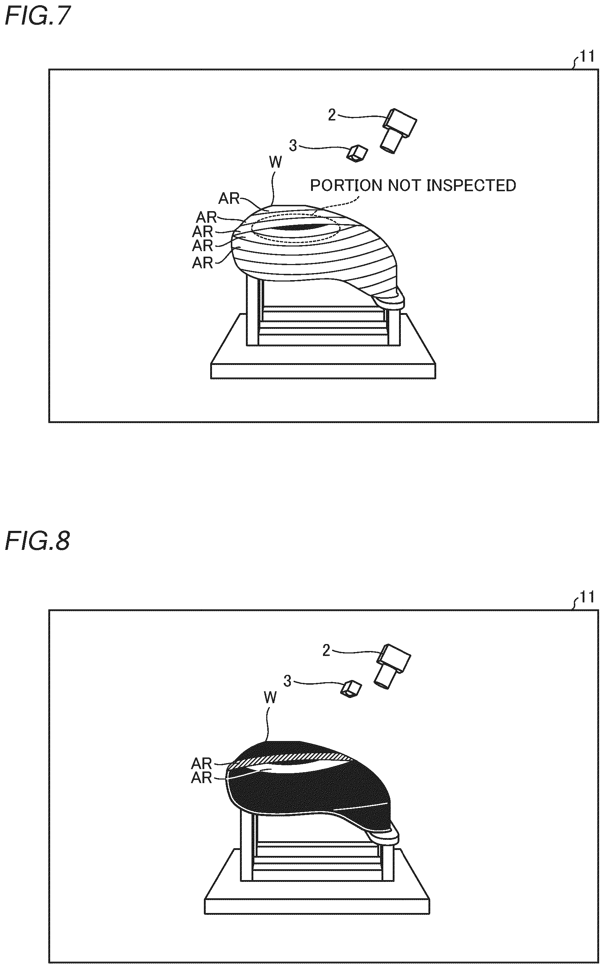

In this embodiment, as shown in FIGS. 7 and 8, the processing unit 13 acquires a plurality of band-shaped inspection regions AR corresponding to a plurality of movement paths PA, and displays the acquired plurality of band-shaped inspection regions AR superimposed on the workpiece W displayed on the display 11. Specifically, the processing unit 13 displays one or more band-shaped inspection regions AR corresponding to one or more movement paths PA specified by the user superimposed on the workpiece W displayed on the display 11 based on the input operation of the user using the operation unit 12. For example, as shown in FIG. 7, when all movement paths PA are specified by the user, the processing unit 13 displays a plurality of band-shaped inspection regions AR corresponding to all the movement paths PA superimposed on the workpiece W displayed on the display 11. Furthermore, for example, as shown in FIG. 8, when any plurality of movement paths PA are specified by the user, the processing unit 13 displays a plurality of band-shaped inspection regions AR corresponding to any plurality of movement paths PA superimposed on the workpiece W displayed on the display 11. When displaying, on the display 11, the plurality of band-shaped inspection regions AR corresponding to any plurality of movement paths PA, the processing unit 13 displays, on the display 11, the plurality of band-shaped inspection regions AR in different colors.

For example, the user first causes the display 11 to display the plurality of band-shaped inspection regions AR corresponding to all the movement paths PA (see FIG. 7) and checks whether or not there is a portion not inspected in the current movement path PA. When there is a portion in which the band-shaped inspection region AR does not overlap the workpiece W and a portion of the surface of the workpiece W is visually recognizable, the user determines that there is a portion not inspected in the current movement path PA. When there is a portion not inspected in the current movement path PA, the user specifies a movement path PA close to the portion not inspected as a movement path PA related to the portion not inspected, and causes the display 11 to display the band-shaped inspection region AR corresponding to the specified movement path PA and superimposed on the workpiece W displayed on the display 11 (see FIG. 8). Thus, it is possible to easily visually recognize the state of the portion not inspected in the current movement path PA and the state of the inspection region AR related to the portion not inspected. Then, the user corrects the teaching points P such that there is no portion that is not inspected based on the state of the portion not inspected in the current movement path PA and the state of the inspection region AR related to the portion not inspected. When the inspection region AR is displayed again on the display 11 after the teaching points P are corrected, it is possible to check whether or not there is a portion left that is not inspected.

### Models of Imager, Illuminator, Robot, and Workpiece

In this embodiment, the storage 14 stores a plurality of models M2 of the illuminator 3. The processing unit 13 acquires the state of reflection of the illumination light by simulation according to the illuminator 3 of a model selected based on the input operation of the user using the operation unit 12 from among the plurality of models M2 of the illuminator 3 stored in the storage 14. The models M2 of the illuminator 3 include information such as the dimensions of the illuminator 3, the shape of the illuminator 3, the type of light source of the illuminator 3, the arrangement of the light source of the illuminator 3, and the color of the illumination light. Specifically, the plurality of models M2 of the illuminator 3 include a model of line-type illumination and a model of pattern-type illumination. The model of line-type illumination refers to the model of the illuminator 3 including the light source arranged in a line to emit illumination light in a line. The line-type illumination is used in combination with a line-type camera, for example. The model of pattern-type illumination refers to the model of the illuminator 3 including the light source arranged two-dimensionally to emit illumination light of a predetermined pattern, such as a grid pattern. The pattern-type illumination is used in combination with an area-type camera, for example.

In this embodiment, the storage 14 stores a plurality of models M1 of the imager 2. The processing unit 13 acquires the captured image IM of the workpiece W captured by the imager 2 according to the imager 2 of a model selected based on the input operation of the user using the operation unit 12 from among the plurality of models M1 of the imager 2 stored in the storage 14. The models M1 of the imager 2 include information such as the dimensions of the imager 2, the shape of the imager 2, the viewing angle of the imager 2, a working distance representing a distance from the lens of the imager 2 to a focal position at which the focus is achieved, and the type of image sensor of the imager 2. Specifically, the plurality of models M1 of the imager 2 include a model of a line-type camera and a model of an area-type camera. The model of a line-type camera refers to the model of the imager 2 including a line image sensor to image the workpiece W in a line shape. In inspection of the appearance of the workpiece W using a line-type camera, scan imaging is performed in which the workpiece W is continuously imaged while the imager 2 is moved with respect to the workpiece W, for example. The model of an area-type camera refers to the model of the imager 2 including a two-dimensional image sensor to image the workpiece W in a two-dimensional predetermined area. In inspection of the appearance the workpiece W using an area-type camera, intermittent imaging is performed in which the workpiece W is intermittently imaged while the imager 2 is moved with respect to the workpiece W, for example. FIGS. 3 to 8 illustrate a case in which the model of a line-type camera is selected and scan imaging is performed. Even when the model of an area-type camera is selected and intermittent imaging is performed, it is possible to display, on the display 11, an image relating to the state of reflection of illumination light as shown in FIGS. 3 to 8.

The storage 14 also stores the model M3 of the robot 4 and the model M4 of the workpiece W. The model M3 of the robot 4 includes information such as the dimensions and shape of the robot 4. The model M4 of the workpiece W includes information such as the dimensions of the workpiece W, the shape of the workpiece W, the color of the surface of the workpiece W, and the reflectance of the surface of the workpiece W. In this embodiment, the processing unit 13 acquires the state of reflection of the illumination light by simulation based on the color and reflectance of the surface of the workpiece W. That is, the processing unit 13 acquires the state of reflection of the illumination light by simulation, taking into account absorption of the illumination light by the color of the surface of the workpiece W. The processing unit 13 may also display, on the display 11, a user interface for changing the color and reflectance of the surface of the workpiece W.

### Flow of Offline Teaching Using Robot Teaching Device

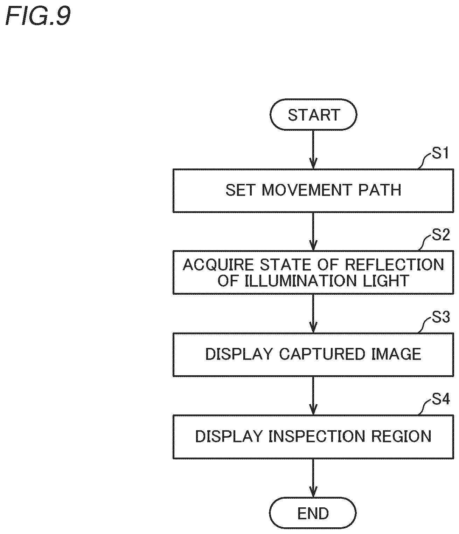

Referring to FIG. 9, a flow of offline teaching using the robot teaching device 1 according to this embodiment is now described based on a flowchart.

As shown in FIG. 9, first, in step S1, the movement path PA to be taken by the robot 4 when performing inspection of the appearance of the workpiece W is set based on the input operation of the user using the operation unit 12. Then, in step S2, the state of reflection of the illumination light is acquired based on the input operation of the user using the operation unit 12. Then, in step S3, the captured image IM is displayed on the display 11 based on the input operation of the user using the operation unit 12.

In step S3, for example, the captured image IM (see FIG. 4) of the workpiece W including the state of reflection of the illuminator 3 when the robot 4 is in the predetermined posture is displayed on the display 11. The user determines the validity of the model M1 of the imager 2, the model M2 of the illuminator 3, and the model M4 of the workpiece W used in the simulation based on the captured image IM as shown in FIG. 4. Specifically, the user compares the high-brightness portion HB in the simulated captured image IM as shown in FIG. 4 with the high-brightness portion in an actual captured image such as a past captured image, and determines whether or not the high-brightness portion HB in the simulated captured image IM is valid. When the user determines that the high-brightness portion HB in the simulated captured image IM is not valid, the user corrects at least one of the model M1 of the imager 2, the model M2 of the illuminator 3, and the model M4 of the workpiece W such that the high-brightness portion HB in the simulated captured image IM becomes valid.

In step S3, for example, the captured image IM (see FIG. 5) of the workpiece W including the state of reflection of the illuminator 3 when the imager 2 and the illuminator 3 are moved by the robot 4 along the movement path PA is displayed on the display 11. Based on the captured image IM as shown in FIG. 5, the user checks the state of the high-brightness portion HB in the captured image IM when the robot 4 performs an inspection operation. For example, the user checks how the width of the high-brightness portion HB changes in response to a change in the curved surface of the workpiece W.

Then, in step S4, the inspection region AR is displayed on the display 11 so as to be superimposed on the workpiece W based on the input operation of the user using the operation unit 12. In step S4, for example, the plurality of band-shaped inspection regions AR (see FIG. 7) corresponding to all the movement paths PA are displayed on the display 11 so as to be superimposed on the workpiece W. The user checks whether or not there is a portion not inspected in the current movement path PA based on the inspection region AR as shown in FIG. 7. When there is a portion not inspected in the current movement path PA, the user specifies a movement path PA close to the portion not inspected, for example. Then, the band-shaped inspection region AR (see FIG. 8) corresponding to the specified movement path PA is displayed on the display 11 so as to be superimposed on the workpiece W. The user determines which teaching point P should be corrected and how, based on the inspection region AR as shown in FIG. 8. Then, based on the input operation of the user using the operation unit 12, the teaching point P is corrected such that there is no portion that is not inspected, and the movement path PA is corrected. Furthermore, if necessary, one inspection region AR as shown in FIG. 6 is displayed on the display 11.

As described above, offline teaching is performed using the robot teaching device 1. Then, an operation program for the robot 4 including the corrected movement path PA is created by the robot teaching device 1. When the appearance of the workpiece W is actually inspected, the imager 2, the illuminator 3, and the robot 4 operate based on the operation program created by the robot teaching device 1.

### Advantages of This Embodiment

According to this embodiment, as described above, the robot teaching device 1 is a robot teaching device 1 for the visual inspection system 100 including the imager 2 to image the workpiece W, the illuminator 3 to emit illumination light to the workpiece W, and the robot 4 to move the imager 2 and the illuminator 3 to inspect the appearance of the workpiece W, and includes the display 11 and the processing unit 13 to acquire the state of reflection of the illumination light on the workpiece W by simulation and display the image relating to the acquired state of reflection of the illumination light on the display 11, when the robot 4 is taught on the display 11 to operate.

When the appearance of the workpiece W is inspected, the entire range of the image captured by the imager 2 does not contribute to the inspection of the appearance of the workpiece W, but only the high-brightness portion HB of the image captured by the imager 2, which has a large reflection amount of illumination light and high brightness, contributes to the inspection of the appearance of the workpiece W. Therefore, it is possible to know with high accuracy which portion of the workpiece W is being inspected by identifying the high-brightness portion HB, and thus it is possible to teach the robot 4 to operate in a manner that eliminates or minimizes omissions of inspection the appearance of the workpiece W. Therefore, as described above, by displaying the image relating to the state of reflection of the illumination light on the display 11, it is possible to easily identify the high-brightness portion HB that actually contributes to the inspection of the appearance of the workpiece W based on the image relating to the state of reflection of the illumination light displayed on the display 11, and thus it is possible to easily teach the robot 4 to operate in a manner that eliminates or minimizes omissions of inspection the appearance of the workpiece W.

According to this embodiment, as described above, the processing unit 13 is operable to acquire the state of reflection of the illuminator 3 in the captured image IM of the workpiece W captured by the imager 2 as the state of reflection of the illumination light, and display the captured image IM of the workpiece W including the acquired state of reflection of the illuminator 3 on the display 11. Accordingly, the captured image IM of the workpiece W including the state of reflection of the illuminator 3 is displayed on the display 11 such that the high-brightness portion HB in the captured image IM can be easily identified. Consequently, it is possible to easily teach the robot 4 to operate in a manner that eliminates or minimizes omissions of inspection the appearance of the workpiece W.

According to this embodiment, as described above, the processing unit 13 is operable to display, on the display 11, the captured image IM of the workpiece W including the state of reflection of the illuminator 3 when the robot 4 is in the predetermined posture. Accordingly, the captured image IM of the workpiece W including the state of reflection of the illuminator 3 when the robot 4 is in the predetermined posture is displayed on the display 11 such that the high-brightness portion HB in the captured image IM when the robot 4 is in the predetermined posture can be identified. Furthermore, by comparing the high-brightness portion HB in the captured image IM when the robot 4 is in the predetermined posture with the high-brightness portion HB in the actual captured image IM such as a past captured image IM, it is possible to easily check whether or not the high-brightness portion HB in the simulated captured image IM is problem-free. Thus, it is possible to check the validity of the simulation.

According to this embodiment, as described above, the processing unit 13 is operable to display, on the display 11, the captured image IM of the workpiece W including the state of reflection of the illuminator 3 when the imager 2 and the illuminator 3 are moved by the robot 4 along the movement path PA. Accordingly, the captured image IM of the workpiece W including the state of reflection of the illuminator 3 when the imager 2 and the illuminator 3 are moved by the robot 4 along the movement path PA is displayed on the display 11 such that it is possible to identify the high-brightness portion HB in the captured image IM when the robot 4 performs an inspection operation.

According to this embodiment, as described above, the processing unit 13 is operable to acquire the state of reflection of the illuminator 3 in the captured image IM of the workpiece W captured by the imager 2 as the state of reflection of the illumination light, acquire the inspection region AR in which the workpiece W is inspectable based on the acquired state of reflection of the illuminator 3, and display the acquired inspection region AR superimposed on the workpiece W displayed on the display 11. Accordingly, the inspection region AR in which the workpiece W is inspectable can be superimposed on the workpiece W and displayed, and thus it is possible to easily visually confirm a portion of the workpiece W that can be inspected. Consequently, it is possible to more easily teach the robot 4 to operate in a manner that eliminates or minimizes omissions of inspection the appearance of the workpiece W.

According to this embodiment, as described above, the processing unit 13 is operable to acquire the band-shaped inspection region AR when the imager 2 and the illuminator 3 are moved by the robot 4 along the movement path PA, and display the acquired band-shaped inspection region AR superimposed on the workpiece W displayed on the display 11. Accordingly, the band-shaped inspection region AR that can be inspected when the robot 4 performs an inspection operation can be superimposed on the workpiece W and displayed, and thus it is possible to easily visually confirm the portion of the workpiece W that can be inspected when the robot 4 performs an inspection operation. Consequently, it is possible to even more easily teach the robot 4 to operate in a manner that eliminates or minimizes omissions of inspection the appearance of the workpiece W.

According to this embodiment, as described above, the processing unit 13 is operable to acquire the plurality of band-shaped inspection regions AR corresponding to the plurality of movement paths PA, and display the acquired plurality of band-shaped inspection regions AR superimposed on the workpiece W displayed on the display 11. Accordingly, the plurality of band-shaped inspection regions AR that can be inspected when a plurality of inspection operations are performed by the robot 4 can be superimposed on the workpiece W and displayed, and thus it is possible to easy visually confirm the portion of the workpiece W that can be inspected when the plurality of inspection operations are performed by the robot 4. Furthermore, it is possible to easily visually confirm a portion of the workpiece W that is not inspected when the robot 4 performs the plurality of inspection operations. Thus, it is possible to more easily teach the robot 4 to operate in a manner that eliminates or minimizes omissions of inspection the appearance of the workpiece W.

According to this embodiment, as described above, the robot teaching device 1 further includes the storage 14 to store the plurality of models M2 of the illuminator 3, and the processing unit 13 is operable to acquire, by simulation, the state of reflection of the illumination light according to the illuminator 3 of the model selected from among the plurality of models M2 of the illuminator 3 stored in the storage 14. Accordingly, the model M2 of the illuminator 3 in the simulation can be selectively used according to the type of illuminator 3 actually used to inspect the appearance of the workpiece W. Thus, even when the type of illuminator 3 actually used to inspect the appearance of the workpiece W is different, the simulation can be flexibly performed.

According to this embodiment, as described above, the robot teaching device 1 further includes the storage 14 to store the plurality of models M1 of the imager 2, and the processing unit 13 is operable to acquire the captured image IM of the workpiece W captured by the imager 2 according to the imager 2 of the model selected from among the plurality of models M1 of the imager 2 stored in the storage 14. Accordingly, the model M1 of the imager 2 in the simulation can be selectively used according to the type of imager 2 actually used to inspect the appearance of the workpiece W. Thus, even when the type of imager 2 actually used to inspect the appearance of the workpiece W is different, the simulation can be flexibly performed.

According to this embodiment, as described above, the plurality of models M1 of the imager 2 include a model of a line-type camera and a model of an area-type camera. Accordingly, the simulation can be performed to flexibly accommodate a line-type camera or an area-type camera, which is often actually used to inspect the appearance of the workpieces W.

According to this embodiment, as described above, the processing unit 13 is operable to acquire the state of reflection of the illumination light by simulation based on the color and reflectance of the surface of the workpiece W. Accordingly, the state of reflection of the illumination light can be accurately acquired based on the color and reflectance of the surface of the workpiece W. Furthermore, when the state of reflection of the illumination light is acquired by the simulation based on the color of the surface of the workpiece W, the state of reflection of the illumination light can be accurately acquired by taking into account the compatibility between the color of the surface of the workpiece W and the color of the illumination light.

According to this embodiment, as described above, the workpiece W includes a curved surface, and the processing unit 13 is operable to acquire the movement path PA for the robot 4 substantially perpendicular to the curved surface of the workpiece W and along the curved surface of the workpiece W, and display the acquired movement path PA on the display 11. Accordingly, the movement path PA for the robot 4 that is substantially perpendicular to the curved surface of the workpiece W and along the curved surface of the workpiece W, and can be accurately imaged but is difficult to teach by visual observation can be displayed on the display 11, and thus it is possible to easily teach the robot 4 to operate so as to accurately perform imaging. Furthermore, when the workpiece W includes a curved surface, the shape of the high-brightness portion HB is likely to change significantly when the imager 2 and the illuminator 3 are moved by the robot 4, and thus being able to identify the high-brightness portion HB has a great effect. Moreover, when the workpiece W includes a curved surface, the curvature of which changes, the shape of the high-brightness portion HB is likely to change more significantly, and thus the effect of being able to identify the high-brightness portion HB is greater.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the robot is a vertical articulated robot has been shown in the aforementioned embodiment, the present disclosure is not limited to this. In the present disclosure, the robot may be a robot other than a vertical articulated robot.

While the example in which the robot moves the imager and the illuminator has been shown in the aforementioned embodiment, the present disclosure is not limited to this. In the present disclosure, the robot may move the workpiece.

While the example in which the captured image including the state of reflection of the illuminator is displayed on the display has been shown in the aforementioned embodiment, the present disclosure is not limited to this. In the present disclosure, the captured image including the state of reflection of the illuminator may not be displayed on the display.

While the example in which the present disclosure is applied to the workpiece including a curved surface has been shown in the aforementioned embodiment, the present disclosure is not limited to this. The present disclosure may be applied to a workpiece having a flat plate shape that does not include a curved surface.

While the example in which the movement path that is substantially perpendicular to the curved surface of the workpiece and along the curved surface of the workpiece is acquired has been shown in the aforementioned embodiment, the present disclosure is not limited to this. In the present disclosure, the movement path that is not substantially perpendicular to the curved surface of the workpiece may be acquired. In other words, a movement path that is not perpendicular to the curved surface of the workpiece may be acquired.

While the example in which the storage stores the plurality of models of the illuminator has been shown in the aforementioned embodiment, the present disclosure is not limited to this. In the present disclosure, the storage may store one model of the illuminator.

While the example in which the plurality of models of the illuminator include a model of line-type illumination and a model of pattern-type illumination has been shown in the aforementioned embodiment, the present disclosure is not limited to this. In the present disclosure, the plurality of models of the illuminator may include, but are not limited to, a model of line-type illumination, a model of pattern-type illumination, a model of a ring-type illumination, a model of an area-type illumination, a model of a bar-type illumination, etc.

While the example in which the storage stores the plurality of models of the imager has been shown in the aforementioned embodiment, the present disclosure is not limited to this. In the present disclosure, the storage may store one model of the imager.

While the example in which the plurality of models of the imager include a model of a line-type camera and a model of an area-type camera has been shown in the aforementioned embodiment, the present disclosure is not limited to this. In the present disclosure, the plurality of models of the imager may include only one of the model of the line-type camera and a model of a pattern-type camera, or the plurality of models of the imager may include a model other than the model of the line-type camera and the model of the pattern-type camera.

While the example in which the state of reflection of the illumination light is acquired by the simulation based on the color and reflectance of the surface of the workpiece has been shown in the aforementioned embodiment, the present disclosure is not limited to this. In the present disclosure, the state of reflection of the illumination light may be acquired by the simulation based on only one of the color and reflectance of the surface of the workpiece, or based on something other than the color and reflectance of the surface of the workpiece.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out the recited functionality or hardware that is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor.

### Aspects

It will be appreciated by those skilled in the art that the exemplary embodiments described above are specific examples of the following aspects.

### (Item 1)

A robot teaching device for a visual inspection system, the visual inspection system comprising an imager to image a workpiece, an illuminator to emit illumination light to the workpiece, and a robot to move the imager and the illuminator, or the workpiece to inspect an appearance of the workpiece, the robot teaching device comprising:
a display; and
a processing unit to acquire a state of reflection of the illumination light on the workpiece by simulation and display an image relating to an acquired state of reflection of the illumination light on the display, when the robot is taught on the display to operate.

### (Item 2)

The robot teaching device according to item 1, wherein the processing unit is operable to acquire a state of reflection of the illuminator in a captured image of the workpiece captured by the imager as the state of reflection of the illumination light, and display the captured image of the workpiece including an acquired state of reflection of the illuminator on the display.

### (Item 3)

The robot teaching device according to item 2, wherein the processing unit is operable to display, on the display, the captured image of the workpiece including the state of reflection of the illuminator when the robot is in a predetermined posture.

### (Item 4)

The robot teaching device according to item 2 or 3, wherein the processing unit is operable to display, on the display, the captured image of the workpiece including the state of reflection of the illuminator when the imager and the illuminator, or the workpiece is moved by the robot along a movement path.

### (Item 5)

The robot teaching device according to any one of items 1 to 4, wherein the processing unit is operable to acquire a state of reflection of the illuminator in a captured image of the workpiece captured by the imager as the state of reflection of the illumination light, acquire an inspection region in which the workpiece is inspectable based on an acquired state of reflection of the illuminator, and display an acquired inspection region superimposed on the workpiece displayed on the display.

### (Item 6)

The robot teaching device according to item 5, wherein the processing unit is operable to acquire a band-shaped inspection region when the imager and the illuminator, or the workpiece is moved by the robot along a movement path, and display an acquired band-shaped inspection region superimposed on the workpiece displayed on the display.

### (Item 7)

The robot teaching device according to item 6, wherein the processing unit is operable to acquire a plurality of band-shaped inspection regions corresponding to a plurality of movement paths, and display an acquired plurality of band-shaped inspection regions superimposed on the workpiece displayed on the display.

### (Item 8)

The robot teaching device according to any one of items 1 to 7, further comprising:
a storage to store a plurality of models of the illuminator; wherein
the processing unit is operable to acquire, by the simulation, the state of reflection of the illumination light according to the illuminator of a model selected from among the plurality of models of the illuminator stored in the storage.

### (Item 9)

The robot teaching device according to any one of items 1 to 8, further comprising:
a storage to store a plurality of models of the imager; wherein
the processing unit is operable to acquire a captured image of the workpiece captured by the imager according to the imager of a model selected from among the plurality of models of the imager stored in the storage.

### (Item 10)

The robot teaching device according to item 9, wherein the plurality of models of the imager include at least one of a model of a line-type camera and a model of an area-type camera.

### (Item 11)

The robot teaching device according to any one of items 1 to 10, wherein the processing unit is operable to acquire the state of reflection of the illumination light by the simulation based on at least one of a color and a reflectance of a surface of the workpiece.

### (Item 12)

The robot teaching device according to any one of items 1 to 11, wherein
the workpiece includes a curved surface; and
the processing unit is operable to acquire a movement path for the robot substantially perpendicular to the curved surface of the workpiece and along the curved surface of the workpiece, and display an acquired movement path on the display.

### (Item 13)

A visual inspection system comprising:
an imager to image a workpiece;
an illuminator to emit illumination light to the workpiece;
a robot to move the imager and the illuminator, or the workpiece to inspect an appearance of the workpiece; and
a robot teaching device; wherein
the robot teaching device includes:
   a display; and
   a processing unit to acquire a state of reflection of the illumination light on the workpiece by simulation and display an image relating to an acquired state of reflection of the illumination light on the display, when the robot is taught on the display to operate.

### (Item 14)

A robot teaching method for a visual inspection system, the visual inspection system comprising an imager to image a workpiece, an illuminator to emit illumination light to the workpiece, and a robot to move the imager and the illuminator, or the workpiece to inspect an appearance of the workpiece, the robot teaching method comprising, when the robot is taught on the display to operate:
acquiring a state of reflection of the illumination light on the workpiece by simulation; and
displaying an image relating to an acquired state of reflection of the illumination light on the display.

### Description of Reference Numerals

1: robot teaching device
2: imager
3: illuminator
4: robot
11: display
13: processing unit
14: storage
100: visual inspection system
AR: inspection region (image relating to a state of reflection of the illumination light)
IM: captured image (image relating to a state of reflection of the illumination light)
PA: movement path
M1: models of the imager
M2: models of the illuminator
W: workpiece

## Claims

1. A robot teaching device for a visual inspection system, the visual inspection system comprising an imager to image a workpiece, an illuminator to emit illumination light to the workpiece, and a robot to move the imager and the illuminator, or the workpiece to inspect an appearance of the workpiece, the robot teaching device comprising:
a display; and
a processing unit to acquire a state of reflection of the illumination light on the workpiece by simulation and display an image relating to an acquired state of reflection of the illumination light on the display, when the robot is taught on the display to operate.

2. The robot teaching device according to claim 1, wherein the processing unit is operable to acquire a state of reflection of the illuminator in a captured image of the workpiece captured by the imager as the state of reflection of the illumination light, and display the captured image of the workpiece including an acquired state of reflection of the illuminator on the display.

3. The robot teaching device according to claim 2, wherein the processing unit is operable to display, on the display, the captured image of the workpiece including the state of reflection of the illuminator when the robot is in a predetermined posture.

4. The robot teaching device according to claim 2, wherein the processing unit is operable to display, on the display, the captured image of the workpiece including the state of reflection of the illuminator when the imager and the illuminator, or the workpiece is moved by the robot along a movement path.

5. The robot teaching device according to claim 1, wherein the processing unit is operable to acquire a state of reflection of the illuminator in a captured image of the workpiece captured by the imager as the state of reflection of the illumination light, acquire an inspection region in which the workpiece is inspectable based on an acquired state of reflection of the illuminator, and display an acquired inspection region superimposed on the workpiece displayed on the display.

6. The robot teaching device according to claim 5, wherein the processing unit is operable to acquire a band-shaped inspection region when the imager and the illuminator, or the workpiece is moved by the robot along a movement path, and display an acquired band-shaped inspection region superimposed on the workpiece displayed on the display.

7. The robot teaching device according to claim 6, wherein the processing unit is operable to acquire a plurality of band-shaped inspection regions corresponding to a plurality of movement paths, and display an acquired plurality of band-shaped inspection regions superimposed on the workpiece displayed on the display.

8. The robot teaching device according to claim 1, further comprising:
a storage to store a plurality of models of the illuminator; wherein
the processing unit is operable to acquire, by the simulation, the state of reflection of the illumination light according to the illuminator of a model selected from among the plurality of models of the illuminator stored in the storage.

9. The robot teaching device according to claim 1, further comprising:
a storage to store a plurality of models of the imager; wherein
the processing unit is operable to acquire a captured image of the workpiece captured by the imager according to the imager of a model selected from among the plurality of models of the imager stored in the storage.

10. The robot teaching device according to claim 9, wherein the plurality of models of the imager include at least one of a model of a line-type camera and a model of an area-type camera.

11. The robot teaching device according to claim 1, wherein the processing unit is operable to acquire the state of reflection of the illumination light by the simulation based on at least one of a color and a reflectance of a surface of the workpiece.

12. The robot teaching device according to claim 1, wherein
the workpiece includes a curved surface; and
the processing unit is operable to acquire a movement path for the robot substantially perpendicular to the curved surface of the workpiece and along the curved surface of the workpiece, and display an acquired movement path on the display.

13. A visual inspection system comprising:
an imager to image a workpiece;
an illuminator to emit illumination light to the workpiece;
a robot to move the imager and the illuminator, or the workpiece to inspect an appearance of the workpiece; and
a robot teaching device; wherein
the robot teaching device includes:
a display; and
a processing unit to acquire a state of reflection of the illumination light on the workpiece by simulation and display an image relating to an acquired state of reflection of the illumination light on the display, when the robot is taught on the display to operate.

14. A robot teaching method for a visual inspection system, the visual inspection system comprising an imager to image a workpiece, an illuminator to emit illumination light to the workpiece, and a robot to move the imager and the illuminator, or the workpiece to inspect an appearance of the workpiece, the robot teaching method comprising, when the robot is taught on the display to operate:
acquiring a state of reflection of the illumination light on the workpiece by simulation; and
displaying an image relating to an acquired state of reflection of the illumination light on the display.
